(19) Europäisches Patentamt
European Patent Office
Office européen des brevets

(11) **EP 4 557 403 A1**

(12) **EUROPEAN PATENT APPLICATION**
published in accordance with Art. 153(4) EPC

(43) Date of publication:
**21.05.2025 Bulletin 2025/21**

(21) Application number: **23863510.6**

(22) Date of filing: **06.09.2023**

(51) International Patent Classification (IPC):
**H01M 4/58** (2010.01)    **H01M 4/36** (2006.01)
**H01M 10/0525** (2010.01)    **H01M 4/02** (2006.01)

(52) Cooperative Patent Classification (CPC):
**H01M 4/02; H01M 4/36; H01M 4/58; H01M 10/0525**

(86) International application number:
**PCT/KR2023/013374**

(87) International publication number:
**WO 2024/054046 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.09.2022 KR 20220113107**

(71) Applicant: **LG Energy Solution, Ltd.
Seoul 07335 (KR)**

(72) Inventors:
• **NA, Sang Mun
Daejeon 34122 (KR)**
• **KANG, Joon Hyeon
Daejeon 34122 (KR)**
• **LEE, Sang Hyun
Daejeon 34122 (KR)**
• **WON, Jung Hye
Daejeon 34122 (KR)**
• **KWON, O Jong
Daejeon 34122 (KR)**
• **HAN, Geum Jae
Daejeon 34122 (KR)**

(74) Representative: **Hoffmann Eitle
Patent- und Rechtsanwälte PartmbB
Arabellastraße 30
81925 München (DE)**

(54) **LITHIUM SECONDARY BATTERY**

(57)    The present invention relates to: a lithium secondary battery comprising a cathode, an anode, a separator interposed between the cathode and the anode, and an electrolyte, wherein the cathode comprises a lithium iron phosphate-based compound represented by [chemical formula 1], and the lithium iron phosphate-based compound has a L-value of 0.3926 to 0.3929 as defined by formula (1); and a method for manufacturing the lithium secondary battery.

[FIG. 1]

EP 4 557 403 A1

**Description**

## TECHNICAL FIELD

The present invention relates to a lithium secondary battery, and more particularly, to a lithium secondary battery containing a lithium iron phosphate-based compound as a positive electrode active material and a method for manufacturing the same.

## BACKGROUND ART

Lithium secondary batteries are generally prepared through a method as follows: disposing a separator between a positive electrode including a positive electrode active material and a negative electrode including a negative electrode active material to form an electrode assembly; inserting the electrode assembly into a battery case; injecting a non-aqueous electrolyte that serves as a medium for delivering lithium ions and then sealing the battery case. The non-aqueous electrolyte is generally composed of a lithium salt and an organic solvent capable of dissolving the lithium salt.

As the positive electrode active material for lithium secondary batteries, lithium cobalt-based oxides, lithium manganese-based oxides, lithium iron phosphate-based compounds, lithium nickel cobalt manganese-based oxides, lithium nickel cobalt aluminum-based oxides, and the like are used. In particular, the lithium iron phosphate-based compounds have excellent thermal stability to provide excellent lifetime and safety, and are affordable, and thus are widely used as the positive electrode active material for lithium secondary batteries. However, the lithium iron phosphate-based compounds have lower energy density than other positive electrode active materials, resulting in lower capacity.

In addition, stoichiometry or impurity content of the lithium iron phosphate-based compounds relies on initial synthesis states, storage conditions, or the like, and accordingly, quality uniformity is reduced due to variations in initial charge capacity and lifetime when the lithium iron phosphate-based compounds are applied to batteries.

## DISCLOSURE OF THE INVENTION

## TECHNICAL PROBLEM

An aspect of the present invention provides a lithium secondary battery capable of improving capacity and quality uniformity of secondary batteries by applying a lithium iron phosphate-based compound, in which crystal lattice constants a, b, and c measured through X-ray diffraction analysis (XRD) satisfy certain conditions, and a molar ratio of Li to iron and a doping element (M) measured through ICP analysis satisfies specific ranges, as a positive electrode active material.

## TECHNICAL SOLUTION

According to an aspect of the present invention, there is provided a lithium secondary battery including a positive electrode, a negative electrode, a separator disposed between the positive electrode and the negative electrode, and an electrolyte, wherein the positive electrode includes a lithium iron phosphate-based compound represented by Formula 1 below and the lithium iron phosphate-based compound has an L value of 0.3926 to 0.3929, where the L value is represented by Equation 1 below.

[Formula 1]    $Li_{1-a}[Fe_{1-x}M_x]_{1-y}PO_{4-b}A_b$

In Formula 1 above, M is at least any one selected from the group consisting of Mn, Ni, Co, Cu, Sc, Ti, Cr, V, and Zn, A is at least any one selected from the group consisting of S, Se, F, Cl, and I, and $-0.5<a<0.5$, $0\leq x<1$, $-0.5<y<0.5$, $0\leq b\leq 0.1$, and $1.07\leq(1-a)/(1-y)\leq 1.09$ are satisfied.

$$[\text{Equation 1}]$$

$$L = \frac{c}{\sqrt{a^2+b^2}}$$

In Equation 1 above, a, b, and c are lattice constant values of the lithium iron phosphate-based compound measured through X-ray diffraction (XRD).

Meanwhile, in the lithium iron phosphate-based compound, a molar ratio $1/(1-y)$ of P to Fe and M is 1.02 to 1.10.

In addition, the lithium iron phosphate-based compound may further include a conductive coating layer.

According to another aspect of the present invention, there is provided a method for manufacturing a lithium secondary battery, which includes steps of: measuring lattice constants a, b, and c of a lithium iron phosphate-based compound through X-ray diffraction analysis and measuring an L value defined by Equation 1 below, measuring a molar ratio of Li to Fe and a doping element (M) of the lithium iron phosphate-based compound through ICP analysis, selecting a lithium iron phosphate-based compound, in which the L value satisfies a preset range and a molar ratio of Li to Fe and a doping element (M) is 1.07 to 1.09, as a positive electrode active material, manufacturing a positive electrode containing the selected positive electrode active material, manufacturing an electrode assembly including the positive electrode, a separator, and a negative electrode, and accommodating the electrode assembly in a battery case and then injecting an electrolyte.

$$[\text{Equation 1}]$$

$$L = \frac{c}{\sqrt{a^2 + b^2}}$$

In Equation 1 above, a, b, and c are lattice constant values of the lithium iron phosphate-based compound measured through X-ray diffraction (XRD).

Preferably, the preset range may be 0.3926 to 0.3929.

## ADVANTAGEOUS EFFECTS

The present invention measures lattice constants a, b, and c values through XRD analysis, and measures a molar ratio of Li to Fe and a doping element (M) of a lithium iron phosphate-based compound through ICP analysis, and then uses a lithium iron phosphate-based compound, in which the lattice constants a, b, and c values and the molar ratio of Li to Fe and a doping element (M) satisfy specific conditions, as a positive electrode active material, thereby improving capacity characteristics of LFP cells.

In addition, a method for manufacturing a lithium secondary battery of the present invention includes performing XRD and ICP analysis on a lithium iron phosphate-based compound and then selecting a lithium iron phosphate-based compound that satisfies specific conditions as a positive electrode active material based on the analysis results, and thus manufactures secondary batteries having uniform quality without going through an inconvenient process of manufacturing cells and directly measuring performance.

## BRIEF DESCRIPTION OF THE DRAWINGS

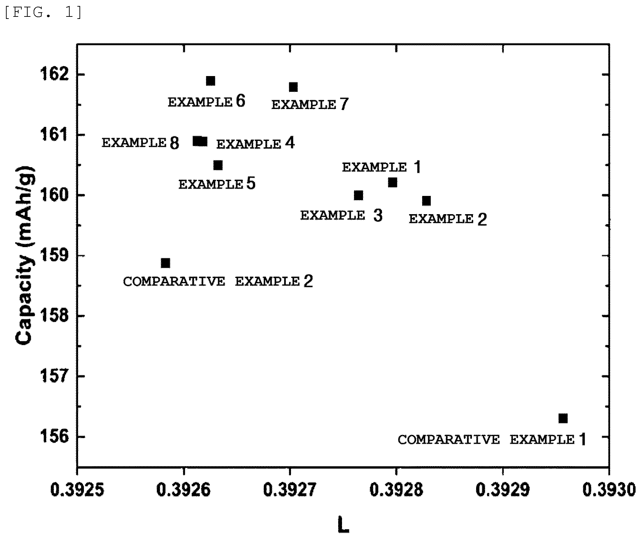

FIG. 1 is a graph showing the initial charge capacity of lithium secondary batteries manufactured in Examples 1 to 8 and Comparative Examples 1 and 2.

## MODE FOR CARRYING OUT THE INVENTION

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In the present invention, the term "primary particle" indicates a particle unit having no observable grain boundaries when observed in a visual field of 5000 to 20000 magnification, using a scanning electron microscope. The term "average particle diameter of primary particles" indicates an arithmetic mean value calculated after measuring particle diameters of primary particles observed in scanning electron microscope images.

In the present invention, the term "average particle diameter $D_{50}$" indicates a particle size with respect to 50% in the volume accumulated particle size distribution of positive electrode active material powder. The average particle diameter $D_{50}$ may be measured by using a laser diffraction method. For example, the average particle diameter $D_{50}$ may be measured in a way that the positive electrode active material powder is dispersed in a dispersion medium, the dispersion medium is introduced into a commercial laser diffraction particle size measurement instrument (e.g., Microtrac MT 3000) and irradiated with ultrasonic waves having a frequency of about 28 kHz and an output of 60 W to obtain a volume accumulated particle size distribution graph, and the particle diameter at 50% of the volume accumulation is calculated.

The mobility of lithium ions upon charging/discharging of a lithium secondary battery is affected by the composition of a positive electrode active material as well as the lattice structure thereof. Therefore, in order to keep electrochemical properties (e.g., energy density and lifetime) steady, a positive electrode active material having less variation in the lattice structure needs to be applied. However, the lattice structure of a lithium iron phosphate-based compound relies on both synthesis conditions and storage environment, and accordingly, even when a lithium iron phosphate-based compound prepared from the same manufacturer are used, variations in capacity characteristics are caused. Therefore, typically, for quality control, there was the inconvenience of preparing lithium secondary battery cells and then testing electrochemical properties.

The inventors conducted numerous experiments to develop a secondary battery (hereinafter referred to as 'LFP cell') using a lithium iron phosphate-based compound having excellent capacity characteristics and quality uniformity, and ended up with a new parameter L that has a correlation with electrochemical performance of the LFP cell, and using the new parameter L, found out a way of manufacturing an LFP cell having excellent initial capacity, and thus have completed the present invention.

The parameter L may be defined by Equation 1 below, and in Equation 1, a, b, and c each indicate lattice constants a, b, and c values of a lithium iron phosphate-based compound measured through X-ray diffraction (XRD).

$$[\text{Equation } 1]$$

$$L = \frac{c}{\sqrt{a^2 + b^2}}$$

According to the research conducted by the inventors, when applying a lithium iron phosphate-based compound, in which the L value satisfies specific ranges and a molar ratio of lithium to iron (Fe) and doping element (M) satisfies specific ranges, as a positive electrode active material, LFP cells were shown to have significantly improved initial capacity characteristics.

The L value and the molar ratio of lithium to iron (Fe) and doping element (M) are closely related to the initial capacity characteristics of LFP cells, and accordingly, the initial capacity characteristics of LFP cells may be predicted without manufacturing cells by measuring the L value through XRD analysis of the lithium iron phosphate-based compound and measuring the Li/(Fe+M) molar ratio through ICP analysis. Therefore, secondary batteries having excellent quality uniformity may be manufactured without going through the inconvenient process of cell manufacturing and performance measuring.

Hereinafter, the present invention will be described in detail.

Lithium secondary battery

First, a lithium secondary battery according to the present invention will be described.

A lithium secondary battery of the present invention includes a positive electrode, a negative electrode, a separator disposed between the positive electrode and the negative electrode, and an electrolyte, and the positive electrode includes a lithium iron phosphate-based compound having an L value of 0.3926 to 0.3929, where the L value is represented by Equation 1 below, and represented by Formula 1.

$$[\text{Equation } 1]$$

$$L = \frac{c}{\sqrt{a^2 + b^2}}$$

In Equation 1 above, a, b, and c are lattice constant values of the lithium iron phosphate-based compound measured through X-ray diffraction (XRD).

[Formula 1] $\quad\quad Li_{1-a}[Fe_{1-x}M_x]_{1-y}PO_{4-b}A_b$

In Formula 1 above, M is at least any one selected from the group consisting of Mn, Ni, Co, Cu, Sc, Ti, Cr, V, and Zn, A is at least any one selected from the group consisting of S, Se, F, Cl, and I, and $-0.5 < a < 0.5$, $0 \leq x < 1$, $-0.5 < y < 0.5$, $0 \leq b \leq 0.1$, and $1.07 \leq (1-a)/(1-y) \leq 1.09$ are satisfied.

(1) Positive electrode

The positive electrode according to the present invention includes a lithium iron phosphate-based compound as a positive electrode active material. Specifically, the positive electrode includes a positive electrode current collector, and a positive electrode active material layer formed on the positive electrode current collector and including the lithium iron phosphate-based compound.

In this case, the lithium iron phosphate-based compound may be represented by Formula 1 below.

$$\text{[Formula 1]} \qquad Li_{1-a}[Fe_{1-x}M_x]_{1-y}PO_{4-b}A_b$$

In Formula 1 above, M may be at least any one selected from the group consisting of Mn, Ni, Co, Cu, Sc, Ti, Cr, V, and Zn, and A may be at least any one selected from the group consisting of S, Se, F, Cl, and I.

In addition, a above may satisfy $-0.5 \leq a \leq 0.5$, preferably $-0.3 \leq a \leq 0.3$, more preferably $-0.1 \leq a \leq 0.1$.

In addition, x above may satisfy $0 \leq x < 1$, preferably $0 \leq x \leq 0.8$, more preferably $0 \leq x \leq 0.7$.

y above may satisfy $-0.5 \leq y \leq 0.5$, preferably $-0.3 \leq y \leq 0.3$, more preferably $-0.1 \leq y \leq 0.1$.

In addition, b above may satisfy $0 \leq b \leq 0.1$, preferably $0 \leq b \leq 0.08$, more preferably $0 \leq b \leq 0.05$.

In particular, considering the effect of improving conductivity and the resulting rate characteristics and capacity characteristics, the lithium iron phosphate-based compound may be, for example, $LiFePO_4$, $Li(Fe, Mn)PO_4$, $Li(Fe, Co)PO_4$, $Li(Fe, Ni)PO_4$, or a mixture thereof, preferably $LiFePO_4$.

Meanwhile, in the lithium iron phosphate-based compound, a molar ratio of Li to Fe and M (Li/(Fe+M)), that is, in Formula 1, $(1-a)/(1-y)$ may be 1.07 to 1.09, preferably 1.08 to 1.09. When the Li/(Fe+M) ratio satisfies the above range, initial capacity is shown to be particularly excellent.

In addition, in the lithium iron phosphate-based compound, a molar ratio of P to Fe and M (P/(Fe+M)), that is, in Formula 1, $1/(1-y)$ may be 1.02 to 1.10, preferably 1.02 to 1.08, more preferably 1.03 to 1.07. When the molar ratio of P to Fe and M is too small, polyanion $PO_4$ is insufficient in the lattice structure, and when the molar ratio of P to Fe and M is too large, Li at the Fe site may increase, resulting in a Li excess state, which may deteriorate capacity characteristics.

Meanwhile, the amounts (mol) of Li, Fe, M, and P in the lithium iron phosphate-based compound are values measured through ICP analysis. The ICP analysis may be performed in the following way.

First, a lithium iron phosphate-based positive electrode active material is aliquoted into a vial (approximately 10 mg) and is accurately weighed. Then, 2 ml of hydrochloric acid and 1 ml of hydrogen peroxide are added to the vial and dissolved at 100 °C for 3 hours. Thereafter, 50 g of ultrapure water is added to the vial, and 1000 $\mu$g/ml scandium (0.5 ml) (internal standard) is accurately added to prepare a sample solution. The sample solution is filtered through a filter of PVDF 0.45 $\mu$m, and then the concentrations of Li, Fe, M, and P components are measured using the instrument of ICP-OES (Perkin Elmer, AVI0500). If required, additional dilution may be performed so that the measured concentration of the sample solution falls within the calibration range of each component.

Meanwhile, the lithium iron phosphate-based compound has an L value of 0.3926 to 0.3929, preferably 0.3926 to 0.3928, more preferably 0.2936 to 0.39275, where the L value is represented by Equation 1 below.

$$\text{[Equation 1]}$$

$$L = \frac{c}{\sqrt{a^2 + b^2}}$$

In Equation 1 above, a, b, and c are lattice constant values of the lithium iron phosphate-based compound measured through X-ray diffraction (XRD).

According to the research conducted by the inventors, when a lithium iron phosphate-based compound whose L value satisfies the above range is applied as a positive electrode active material, excellent initial capacity may be achieved.

The L value is related to the Li concentration in the lattice structure of the lithium iron phosphate-based compound. When Li is removed from the lattice structure of the lithium iron phosphate-based compound, the $Fe^{2+}O_6$ octahedral structure turns into a $Fe^{3+}O_6$ octahedral structure to cause an average Fe-O bond length to be reduced, resulting in a decrease in the lattice constants a and b. In addition, when the $Fe^{2+}O_6$ octahedral structure turns into a $Fe^{3+}O_6$ octahedral structure, the apical Fe-01 decreases and thus the $PO_4$ tetrahedral structure rotates around an axis of

EP 4 557 403 A1

b, resulting in an increase in the lattice constant c. That is, when the Li concentration in the LFP lattice structure decreases, the L value increases, and when the Li concentration increases, the L value decreases. The initial capacity of the lithium iron phosphate-based compound is determined by several factors such as Li content and carbon coating amount, and according to research conducted by the inventors, it was confirmed that among various factors, the Li concentration in the lattice structure represented by the L value most closely related to the initial capacity, and in particular, it was confirmed that the initial capacity was shown to be highest when the L value was in the range of 0.3926 to 0.3929.

The particle shape of the lithium iron phosphate-based compound is not particularly limited, but may be spherical considering tap density.

In addition, the lithium iron phosphate-based compound may be composed of a single primary particle, or may be composed of secondary particles in which a plurality of primary particles are aggregated. In this case, the primary particles may be uniform or non-uniform. In the present invention, the primary particle indicate a primary structure of a single particle, and the secondary particle indicates an aggregate in which primary particles are aggregated through physical or chemical bonds between the primary particles, that is, a secondary structure.

Meanwhile, the lithium iron phosphate-based compound may further include the carbon-based coating layer. The lithium iron phosphate-based compound is structurally very stable, but has relatively low electrical conductivity. Therefore, it is desirable to improve electrical conductivity and resistance by coating a surface of the lithium iron phosphate-based compound with highly conductive carbon.

In addition, the lithium iron phosphate-based compound may have an average particle diameter ($D_{50}$) of 1 $\mu$m to 20 $\mu$m, preferably 2 $\mu$m to 20 $\mu$m, more preferably 2 $\mu$m to 15 $\mu$m. When the average particle diameter of the lithium iron phosphate-based compound is less than 1 $\mu$m, the characteristics of a positive electrode may be degraded due to reduced dispersibility caused by the aggregation between particles during the production of the positive electrode. In addition, when the average particle diameter ($D_{50}$) of the lithium iron phosphate-based compound is greater than 20 $\mu$m, the mechanical strength and specific surface area may be reduced, the porosity between the lithium iron phosphate-based compound particles may excessively increase to cause reduction in tap density, or sedimentation may take place during the production of a positive electrode slurry.

Meanwhile, when the lithium iron phosphate-based compound is a secondary particle, the primary particle may have an average particle diameter of 100 nm to 2 $\mu$m, preferably 100 nm to 1 $\mu$m, under conditions that meet the average particle diameter range of the secondary particle. When the average particle diameter of the primary particles is less than 100 nm, dispersibility is reduced due to the aggregation between particles, and when the average particle diameter is greater than 2 $\mu$m, packing density may be reduced, resulting in degradation in capacity characteristics of an electrode.

Meanwhile, the lithium iron phosphate-based compound may further include a conductive coating layer on the surface thereof. The conductive coating layer is intended to improve the conductivity of the lithium iron phosphate-based compound, and may include any one or a mixture of two or more selected from the group consisting of carbon-based materials, metals, and conductive polymers. In particular, when a conductive coating layer of the carbon-based material is included, conductivity may be effectively improved without significantly increasing the weight of the lithium iron phosphate-based compound.

The conductive coating layer may be formed according to a typical method of forming a coating layer, and may be included in an amount of 1 wt% to 7 wt%, more specifically, 1 wt% to 5 wt%, with respect to the total weight of the lithium iron phosphate-based compound. When the amount of the conductive coating layer is too large, greater than 7 wt%, there is a concern that battery characteristics may be degraded due to a relative decrease in the LFP content, and when the amount is less than 1 wt%, the effect of improving conductivity resulting from the formation of the conductive layer may be insignificant.

Meanwhile, the positive electrode current collector is not particularly limited as long as it has conductivity without causing a chemical change in a battery. For example, stainless steel, aluminum, nickel, titanium, baked carbon, or aluminum or stainless steel that is surface-treated with one of carbon, nickel, titanium, silver, and the like may be used. In addition, the positive electrode current collector may typically have a thickness of 3 $\mu$m to 500 $\mu$m, and fine irregularities may be formed on a surface of the collector to improve the adhesion of the positive electrode active material. For example, the positive electrode current collector may be used in various forms such as a film, a sheet, a foil, a net, a porous body, a foam body, and a non-woven fabric body.

Meanwhile, the positive electrode active material layer may further include a conductive material, a binder, a dispersant, and the like, in addition to the lithium iron phosphate-based compound.

In this case, the conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fibers, and carbon nanotubes; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.4 wt% to 10 wt%, preferably 0.4 wt% to 7 wt%, more preferably 0.4 wt% to 5 wt%, with respect to a total weight of the positive electrode active material layer. When the amount of the conductive material satisfies the above range, excellent positive electrode conductivity and capacity may be achieved.

In addition, the binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene-butadiene rubber (SBR), fluorine rubber, or various copolymers thereof, and any one thereof or a mixture of two or more thereof may be used.

The binder may be included in an amount of 1 wt% to 5 wt%, preferably 1.5 wt% to 5 wt%, more preferably 1.5 wt% to 4 wt%, even more preferably 2 wt% to 4 wt%, with respect to a total weight of the positive electrode active material layer. When the amount of the binder satisfies the above range, adhesion between the current collector and the positive active material layer is high, and thus a separate layer (e.g., a primer layer) designed to improve adhesion is not required, and even when the positive electrode loading amount is high (e.g., 400 mg/25 cm$^2$ or greater), the positive electrode adhesion may remain excellent to achieve excellent capacity and lifetime.

The dispersant is intended to improve the dispersibility of the lithium iron phosphate-based compound, the conductive material, and the like, and for example, hydrogenated nitrile-butadiene rubber (H-NBR) may be used, but the embodiment of the present invention is not limited thereto, and various dispersants that may improve the dispersibility of a positive electrode slurry may be used. The dispersant may be included in an amount of 2 wt% or less, preferably 0.1 to 2 wt%, more preferably 0.1 to 1 wt%, with respect to a total weight of the positive electrode active material layer. When the amount of the dispersant is too small, the effect of improving dispersion will be insignificant, and when the amount is too high, it may adversely affect battery performance.

Meanwhile, the positive electrode according to the present invention may have a loading amount of 350 mg/25 cm$^2$ to 2000 mg/25 cm$^2$, preferably 400 mg/25 cm$^2$ to 1700 mg/25 cm$^2$, more preferably 450 mg/25 cm$^2$ to 1000 mg/25 cm$^2$. When the positive electrode loading amount satisfies the above range, capacity may be greater than that of typical LFP cells. In this case, the positive electrode loading amount indicates the weight of the lithium iron phosphate-based compound contained in an area of 25 cm$^2$ of the positive electrode.

In addition, the positive electrode has a porosity of 25% to 60%, preferably 28% to 55%, more preferably 28% to 40%, even more preferably 28% to 35%, more preferably 25% to 30%. When the positive electrode porosity is formed to be in the above range, both energy density and electrolyte impregnation may remain excellent. As for the LFP cell, the lithium iron phosphate-based compound, which is the positive electrode active material has small particle size, and thus the pore size in the positive electrode is small to cause degradation in electrolyte impregnation properties, and accordingly, the LFP cell preferably forms a higher positive electrode porosity than batteries using other positive electrode active materials, but when the positive electrode porosity increases, energy density is reduced. Accordingly, the positive electrode porosity is required to be appropriately regulated to maintain both excellent energy density and electrolyte impregnation properties.

(2) Negative electrode

According to the present invention, the negative electrode may be a negative electrode commonly used in the art, and for example, the negative electrode may include a negative electrode current collector and a negative electrode active material layer positioned on the negative electrode current collector.

The negative electrode may be prepared, for example, in a way that a negative electrode slurry containing a negative electrode active material and optionally a binder and a conductive material is applied onto a negative electrode current collector and dried to form a negative electrode active material layer, and then rolled or a separate support is cast with the negative electrode slurry, and then a film obtained by peeling from the support is laminated on the negative electrode current collector.

The negative electrode current collector is not particularly limited as long as it has a high conductivity without causing a chemical change in a battery. For example, copper, stainless steel, aluminum, nickel, titanium, baked carbon, copper or stainless steel that is surface-treated with one of carbon, nickel, titanium, silver, and the like, an aluminum-cadmium alloy, and the like may be used. In addition, the negative electrode current collector may typically have a thickness of 3 μm to 500 μm, and as in the case of the positive electrode current collector, fine irregularities may be formed on the surface of the negative electrode current collector to improve the adhesion of a negative electrode active material. For example, the negative electrode current collector may be used in various forms such as a film, a sheet, a foil, a net, a porous body, a foam body, and a non-woven fabric body.

The negative electrode active material layer selectively includes a binder and a conductive material in addition to a negative electrode active material.

A compound capable of reversibly intercalating and deintercalating lithium may be used as the negative electrode active material. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as $SiO_x$ (0 < x < 2), $SnO_2$, a vanadium oxide, and a lithium vanadium oxide; or a composite including the metallic compound and the carbonaceous material such as an Si-C composite or an Sn-C composite, and any one thereof or a mixture of two or more thereof may be used. In addition, as the negative electrode active material, a lithium metal thin film may be used. Additionally, as a carbon material, low-crystalline carbon, high-crystalline carbon, and the like may all be used. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

In addition, the binder and the conductive material may be the same as described above for the positive electrode.

(3) Separator

In the present invention, the separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. In addition, a coated separator including a ceramic component or a polymer material may be used to secure heat resistance or mechanical strength, and may be optionally used in a single-layered or a multi-layered structure.

(4) Electrolyte

The electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

For example, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

The lithium salt may be used without particular limitation as long as it is a compound capable of providing lithium ions used in lithium secondary batteries. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, $LiB(C_2O_4)_2$, or the like may be used. The lithium salt may be used in a concentration range of 0.1 M to 2.0 M. When the concentration of the lithium salt is in the above range, the electrolyte has suitable conductivity and viscosity, thereby exhibiting excellent performance, and lithium ions may effectively move.

In addition to the electrolyte constituents, the electrolyte may further include additives for improving life characteristics of a battery, preventing reduction in battery capacity, and increasing battery discharge capacity. As the additive, a variety of electrolyte additives used in lithium secondary batteries may be used, and for example, halocarbonate-based compounds such as fluoroethylene carbonate; nitrile-based compounds such as succinonitrile, sultone compounds such as 1,3-propane sultone and 1,3-propene sultone; carbonate-based compounds such as vinylene carbonate; or a combination thereof may be used, but the additive is not limited thereto. In this case, the additive may be included in an amount of 0.1 wt% to 10 wt%, preferably 0.1 wt% to 5 wt%, with respect to a total weight of the electrolyte.

The lithium secondary battery of the present invention as described above has greater charge capacity than typical batteries. Specifically, the lithium secondary battery according to the present invention may have a first charge capacity of 93% to 100%, preferably 93% to 98%, more preferably 94% to 97% of theoretical capacity when charged up to 3.7 V at 0.1 C with respect to the theoretical capacity (170 mAh/g) of lithium iron phosphate.

Specifically, the lithium secondary battery according to the present invention may have a first charge capacity of 158 mAh/g to 170 mAh/g, preferably 158 mAh/g to 167 mAh/g, more preferably 159 mAh/g to 165 mAh/g when charged up to 3.7 V at 0.1 C with respect to the theoretical capacity (170 mAh/g) of lithium iron phosphate.

<Method for manufacturing lithium secondary battery>

Hereinafter, A method for manufacturing a lithium secondary battery according to the present invention will be described.

The method for manufacturing a lithium secondary battery according to the present invention includes steps of: (1) measuring lattice constants a, b, and c of a lithium iron phosphate-based compound through X-ray diffraction analysis and measuring an L value defined by Equation 1 below, (2) measuring a molar ratio of Li to Fe and a doping element M of the lithium iron phosphate-based compound through ICP analysis, (3) selecting a lithium iron phosphate-based compound, in which the L value satisfies a preset range and a molar ratio of Li to Fe and a doping element M is 1.08 to 1.09, as a positive electrode active material, (4) manufacturing a positive electrode containing the selected positive electrode active material, (5) manufacturing an electrode assembly including the positive electrode, a separator, and a negative electrode, and (6) accommodating the electrode assembly in a battery case and then injecting an electrolyte.

$$[\text{Equation } 1]$$

$$L = \frac{c}{\sqrt{a^2 + b^2}}$$

In Equation 1 above, a, b, and c are lattice constant values of the lithium iron phosphate-based compound measured through X-ray diffraction (XRD).

(1) X-ray diffraction analysis process

First, the lattice constants a, b, and c of the lithium iron phosphate-based compound are measured through X-ray diffraction analysis.

In this case, the X-ray diffraction analysis was performed using the instrument of Bruker D8 Endeavor in the following manner.

First, depending on the amount of sample to be measured, powder was put into the center groove of a holder for general powder or a holder for small amount of powder, and a slide glass was used to ensure that the height of the sample matches an edge of the holder and a surface of the sample is uniform. Then, fixed divergence slit was set to 0.3 according to the sample size, and the 2θ area was measured every 0.016°. The phases present in the sample in the range of 10 to 120° were subjected to Rietveld refinement using a complete structure model.

Thereafter, the L value is measured by substituting the lattice constants a, b, and c of the lithium iron phosphate-based compound measured through X-ray diffraction analysis into Equation 1.

$$[\text{Equation } 1]$$

$$L = \frac{c}{\sqrt{a^2 + b^2}}$$

In Equation 1 above, a, b, and c are lattice constant values of the lithium iron phosphate-based compound measured through X-ray diffraction (XRD).

As described above, the electrochemical performance of the LFP cell is closely related to the L value indicated by Equation 1. Accordingly, a positive electrode active material capable of achieving the desired performance of lithium secondary battery cells may be selected without going through an inconvenient process of manufacturing cells and directly measuring performance, by performing XRD analysis on a lithium iron phosphate-based compound to measure the lattice constants a, b, and c, and then using the measured values to determine parameter L values indicated by Equation 1.

(2) ICP analysis process

In addition, a molar ratio of each component of the lithium iron phosphate-based compound is measured through ICP analysis. The ICP analysis may be performed in the following way.

First, a lithium iron phosphate-based positive electrode active material is aliquoted into a vial (approximately 10 mg) and is accurately weighed. Then, 2 ml of hydrochloric acid and 1 ml of hydrogen peroxide are added to the vial and dissolved at 100 °C for 3 hours. Thereafter, 50 g of ultrapure water is added to the vial, and 1000 $\mu$g/ml scandium (0.5 ml) (internal standard) is accurately added to prepare a sample solution. The sample solution is filtered through a filter of PVDF 0.45 $\mu$m, and then the concentrations of Li, Fe, M, and P components are measured using the instrument of ICP-OES (Perkin Elmer, AVI0500). If required, additional dilution may be performed so that the measured concentration of the sample solution falls within the calibration range of each component.

3) Selection of positive electrode active material

Then, a lithium iron phosphate-based compound, in which the L value measured by Equation 1 above satisfies a preset range and a molar ratio of Li to Fe and a doping element (M) is 1.08 to 1.09, is selected as a positive electrode active material.

In this case, the preset range may be appropriately selected considering the electrochemical performance of the LFP cell to be ultimately manufactured, and for example, the preset range may be 0.3926 to 0.3929, preferably 0.3926 to 0.39285. When the lithium iron phosphate-based compound whose L value and molar ratio of Li to Fe and doping element (M) satisfy the above ranges is applied as a positive electrode active material, the initial capacity characteristics of the LFP cell are shown to be excellent.

(4) Preparation of positive electrode

Then, a positive electrode containing the selected positive electrode active material is prepared.

In this case, the positive electrode may be prepared according to general methods for manufacturing a positive electrode, which are known in the art, except that the lithium iron phosphate-based compound, in which the L value satisfies a preset range and the Li/(Fe+M) molar ratio of 1.08 to 1.09, is used as a positive electrode active material. For example, the positive electrode may be prepared in a way that a positive electrode active material, a binder, and a conductive material are mixed to prepare a positive electrode slurry, and then the positive electrode slurry is applied onto a positive electrode current collector and dried to form a positive active material layer, and then rolled.

Meanwhile, the specific types and specifications of the positive electrode active material, the binder, and the conductive material are the same as above, and thus detailed descriptions are not provided.

(5) Manufacture of electrode assembly

Then, an electrode assembly including the positive electrode prepared as above, a separator, and a negative electrode is manufactured. The specific types and specifications of the negative electrode and the separator are the same as above, and thus detailed descriptions are not provided.

The electrode assembly may be manufactured by sequentially stacking the positive electrode, the separator, and the negative electrode, and the form of the electrode assembly is not particularly limited, and the electrode assembly may be a general electrode assembly known in the field of lithium secondary batteries, for example, a wound type electrode assembly, a stack type electrode assembly, and/or a stack and folding type electrode assembly.

(6) Manufacture of secondary battery

Then, the electrode assembly is accommodated in a battery case and an electrolyte is injected to manufacture a lithium secondary battery.

In this case, the battery case may be any general battery case known in the field of lithium secondary batteries, and for example, cylindrical, square, or pouch-type battery cases may be used without limitation and the battery case is not particularly limited thereto.

Meanwhile, the specific types and specifications of the electrolyte are the same as above, and the electrolyte injection may be performed through a general electrolyte injection method known in the field of lithium secondary batteries.

**MODE FOR CARRYING OUT THE INVENTION**

Hereinafter, the present invention will be described in more detail through specific embodiments.

Experimental Example 1: Measurement of physical properties of lithium iron phosphate-based compounds

Samples of 11 types of lithium iron phosphate-based compound powders A to J were collected and subjected to XRD analysis to measure L values. In addition, the lithium iron phosphate-based compound powders A to J were subjected to ICP analysis to measure Li/Fe molar ratios and P/Fe molar ratios. In this case, the XRD analysis and ICP analysis were performed through the methods described above.

The measurement results are shown in Table 1 below.

[Table 1]

| Item | L value | Li/Fe molar ratio | P/Fe molar ratio |
|---|---|---|---|
| A | 0.39296 | 1.06 | 1.04 |
| B | 0.39258 | 1.06 | 1.04 |
| C | 0.39280 | 1.07 | 1.04 |
| D | 0.39283 | 1.07 | 1.03 |
| E | 0.39276 | 1.08 | 1.03 |
| F | 0.39262 | 1.08 | 1.03 |
| G | 0.39263 | 1.08 | 1.03 |
| H | 0.39263 | 1.08 | 1.06 |
| I | 0.39270 | 1.08 | 1.06 |
| J | 0.39261 | 1.08 | 1.07 |

Example 1

95 parts by weight of Sample C as a positive electrode active material, 2 parts by weight of carbon black as a conductive material, and 3 parts by weight of PVDF as a binder were mixed in a solvent of N-methylpyrrolidone to prepare a positive electrode slurry. The positive electrode slurry was applied onto an aluminum current collector having a thickness of 15 $\mu$m, dried, and then rolled to prepare a positive electrode having a loading amount of 500 mg/25 cm$^2$ and a porosity of 29%.

Meanwhile, 95 parts by weight of artificial graphite as a negative electrode active material, 3 parts by weight of SBR and 1 part by weight of CMC as a binder, and 1 part by weight of carbon black as a conductive material were added to distilled water to prepare a negative electrode slurry. The negative electrode slurry was applied onto a copper current collector having a thickness of 8 $\mu$m, dried, and rolled to prepare a negative electrode having a loading amount of 240 mg/25 cm$^2$ and a porosity of 29%.

The positive electrode and the negative electrode prepared above were staked along with a polyethylene separator to manufacture an electrode assembly, and then the electrode assembly was placed in a battery case, and an electrolyte solution in which 1 M LiPF$_6$ was dissolved in a solvent in which ethylene carbonate, ethylmethyl carbonate, and diethyl carbonate were mixed in a volume ratio of 1:1:1 was injected to manufacture a lithium secondary battery.

Example 2

A lithium secondary battery was manufactured in the same manner as in Example 1, except that Sample D was used instead of Sample C as a positive electrode active material.

Example 3

A lithium secondary battery was manufactured in the same manner as in Example 1, except that Sample E was used instead of Sample C as a positive electrode active material.

Example 4

A lithium secondary battery was manufactured in the same manner as in Example 1, except that Sample F was used instead of Sample C as a positive electrode active material.

Example 5

A lithium secondary battery was manufactured in the same manner as in Example 1, except that Sample G was used instead of Sample C as a positive electrode active material.

Example 6

A lithium secondary battery was manufactured in the same manner as in Example 1, except that Sample H was used instead of Sample C as a positive electrode active material.

Example 7

A lithium secondary battery was manufactured in the same manner as in Example 1, except that Sample I was used instead of Sample C as a positive electrode active material.

Example 8

A lithium secondary battery was manufactured in the same manner as in Example 1, except that Sample J was used instead of Sample C as a positive electrode active material.

Comparative Example 1

A lithium secondary battery was manufactured in the same manner as in Example 1, except that Sample A was used instead of Sample C as a positive electrode active material.

Comparative Example 2

A lithium secondary battery was manufactured in the same manner as in Example 1, except that Sample B was used instead of Sample C as a positive electrode active material.

Experimental Example 2

The lithium secondary batteries manufactured in Examples 1 to 8 and Comparative Examples 1 and 2 were charged up to 3.7 V at 0.1 C with respect to theoretical capacity (170 mAh/g) of lithium iron phosphate, and then discharged up to 2.5 V at 0.1 C. Thereafter, the lithium secondary batteries were charged up to 3.7 V at 0.1 C to measure first charge capacity. The measurement results are shown in FIG. 1.

FIG. 1 shows that the lithium secondary batteries of Examples 1 to 8 using lithium iron phosphate-based compounds C to J having an L value of 0.3926 to 0.3929 and a Li/Fe molar ratio of 1.07 to 1.09 had high initial capacity, which was 159 mAh/g, whereas the lithium secondary battery of Comparative Example 1 using lithium iron phosphate-based compound A having an L value of greater than 0.3929 and a Li/Fe molar ratio of less than 1.07 and the lithium secondary battery of Comparative Example 2 using lithium iron phosphate compound B having an L value of less than 0.3926 and a Li/Fe molar ratio of less than 1.07 had reduced initial capacity.

**Claims**

1.   A lithium secondary battery comprising a positive electrode, a negative electrode, a separator disposed between the positive electrode and the negative electrode, and an electrolyte,

wherein the positive electrode comprises a lithium iron phosphate-based compound represented by Formula 1 below, and
the lithium iron phosphate-based compound has an L value of 0.3926 to 0.3929, where the L value is represented by Equation 1 below:

[Formula 1]          $Li_{1-a}[Fe_{1-x}M_x]_{1-y}PO_{4-b}A_b$

wherein in Formula 1 above, M is at least any one selected from the group consisting of Mn, Ni, Co, Cu, Sc, Ti, Cr, V, and Zn, A is at least any one selected from the group consisting of S, Se, F, Cl, and I, and $-0.5<a<0.5$, $0 \leq x<1$, $-0.5<y<0.5$, $0 \leq b \leq 0.1$, and $1.07 \leq (1-a)/(1-y) \leq 1.09$ are satisfied,

[Equation 1]

$$L = \frac{c}{\sqrt{a^2 + b^2}}$$

wherein in Equation 1 above, a, b, and c are lattice constant values of the lithium iron phosphate-based compound measured through X-ray diffraction (XRD).

2. The lithium secondary battery of claim 1, wherein in the lithium iron phosphate-based compound, a molar ratio $1/(1-y)$ of P to Fe and M is 1.02 to 1.10.

3. The lithium secondary battery of claim 1, wherein the lithium iron phosphate-based compound further comprises a conductive coating layer.

4. The lithium secondary battery of claim 1, wherein the positive electrode has a loading amount of 350 mg/25 cm$^2$ to 2000 mg/25 cm$^2$.

5. The lithium secondary battery of claim 1, wherein the positive electrode has a porosity of 25% to 60%.

6. The lithium secondary battery of claim 1, wherein the lithium secondary battery has a first charge capacity of 93% to 100% of theoretical capacity (170 mAh/g) when charged up to 3.7 V at 0.1 C with respect to the theoretical capacity of lithium iron phosphate.

7. A method for manufacturing a lithium secondary battery, the method comprising steps of:

measuring lattice constants a, b, and c of a lithium iron phosphate-based compound through X-ray diffraction analysis and measuring an L value defined by Equation 1 below;
measuring a molar ratio of Li to Fe and a doping element (M) of the lithium iron phosphate-based compound through ICP analysis;
selecting a lithium iron phosphate-based compound, in which the L value satisfies a preset range and the molar ratio of Li to Fe and a doping element (M) is 1.07 to 1.09, as a positive electrode active material;
manufacturing a positive electrode containing the selected positive electrode active material;
manufacturing an electrode assembly comprising the positive electrode, a separator, and a negative electrode; and
accommodating the electrode assembly in a battery case and then injecting an electrolyte,

[Equation 1]

$$L = \frac{c}{\sqrt{a^2 + b^2}}$$

wherein in Equation 1 above, a, b, and c are lattice constant values of the lithium iron phosphate-based compound measured through X-ray diffraction (XRD).

8. The method of claim 7, wherein the preset range is 0.3926 to 0.3929.

[FIG. 1]

## INTERNATIONAL SEARCH REPORT

International application No.

**PCT/KR2023/013374**

| A. | CLASSIFICATION OF SUBJECT MATTER |
|---|---|

**H01M 4/58**(2010.01)i; **H01M 4/36**(2006.01)i; **H01M 10/0525**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/58(2010.01); C01B 25/45(2006.01); H01M 10/052(2010.01); H01M 10/0525(2010.01); H01M 4/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬(lithium), 인산(phosphoric acid), 철(iron), 이차 전지(rechargeable battery), 격자상수(lattice constant), 양극(anode), 음극(cathode), 전해질(electrolyte)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2014-0064356 A (LG CHEM, LTD.) 28 May 2014 (2014-05-28)<br>See claims 22 and 25, paragraphs [0074] and [0107], and table 1. | 1,3-6 |
| Y | | 2,7,8 |
| Y | JP 2011-213587 A (TODA KOGYO CORP.) 27 October 2011 (2011-10-27)<br>See claim 6. | 2,7,8 |
| A | JP 2016-054158 A (SEMICONDUCTOR ENERGY LAB CO., LTD.) 14 April 2016 (2016-04-14)<br>See paragraphs [0035] and [0065]. | 1-8 |
| A | CN 107069034 A (NATIONAL CENTER FOR NANOSCIENCE AND TECHNOLOGY) 18 August 2017 (2017-08-18)<br>See claims 1-10. | 1-8 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 December 2023** | **18 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/013374**

**C. DOCUMENTS CONSIDERED TO BE RELEVANT**

| Category* | Citation of document, with indication, where appropriate, of the relevant passages | Relevant to claim No. |
|---|---|---|
| A | CN 105118969 A (GRADUATE SCHOOL AT SHENZHEN, TSINGHUA UNIVERSITY) 02 December 2015 (2015-12-02)<br>See claims 1-10. | 1-8 |

**INTERNATIONAL SEARCH REPORT**
Information on patent family members

International application No.

**PCT/KR2023/013374**

| Patent document cited in search report | | | Publication date (day/month/year) | Patent family member(s) | | | Publication date (day/month/year) |
|---|---|---|---|---|---|---|---|
| KR | 10-2014-0064356 | A | 28 May 2014 | KR | 10-1684387 | B1 | 08 December 2016 |
| JP | 2011-213587 | A | 27 October 2011 | CN | 102781827 | A | 14 November 2012 |
| | | | | CN | 102781827 | B | 04 May 2016 |
| | | | | JP | 5817963 | B2 | 18 November 2015 |
| | | | | KR | 10-1810259 | B1 | 18 December 2017 |
| | | | | KR | 10-2013-0057414 | A | 31 May 2013 |
| | | | | WO | 2011-115211 | A1 | 22 September 2011 |
| JP | 2016-054158 | A | 14 April 2016 | JP | 2012-099471 | A | 24 May 2012 |
| | | | | JP | 2018-008877 | A | 18 January 2018 |
| | | | | JP | 2019-094259 | A | 20 June 2019 |
| | | | | JP | 2021-077655 | A | 20 May 2021 |
| | | | | JP | 2023-015393 | A | 31 January 2023 |
| | | | | JP | 5887095 | B2 | 16 March 2016 |
| | | | | JP | 6495981 | B2 | 03 April 2019 |
| | | | | JP | 6836612 | B2 | 03 March 2021 |
| | | | | KR | 10-1865548 | B1 | 11 June 2018 |
| | | | | KR | 10-2012-0036764 | A | 18 April 2012 |
| | | | | KR | 10-2018-0006467 | A | 17 January 2018 |
| | | | | KR | 10-2018-0050619 | A | 15 May 2018 |
| | | | | KR | 10-2019-0014031 | A | 11 February 2019 |
| | | | | KR | 10-2020-0056375 | A | 22 May 2020 |
| | | | | KR | 10-2021-0079247 | A | 29 June 2021 |
| | | | | KR | 10-2023-0154783 | A | 09 November 2023 |
| | | | | KR | 10-2121179 | B1 | 10 June 2020 |
| | | | | KR | 10-2270377 | B1 | 30 June 2021 |
| | | | | KR | 10-2599149 | B1 | 08 November 2023 |
| | | | | TW | 201232903 | A | 01 August 2012 |
| | | | | TW | 201717461 | A | 16 May 2017 |
| | | | | TW | I562444 | B | 11 December 2016 |
| | | | | TW | I626782 | B | 11 June 2018 |
| | | | | US | 10135069 | B2 | 20 November 2018 |
| | | | | US | 2012-0085968 | A1 | 12 April 2012 |
| | | | | US | 2015-0162612 | A1 | 11 June 2015 |
| | | | | US | 8980126 | B2 | 17 March 2015 |
| CN | 107069034 | A | 18 August 2017 | CN | 107069034 | B | 04 February 2020 |
| CN | 105118969 | A | 02 December 2015 | CN | 105118969 | B | 23 June 2017 |

Form PCT/ISA/210 (patent family annex) (July 2022)